# EUROPÄISCHE PATENTSCHRIFT

(11) **EP 2 102 038 B1**
(45) Veröffentlichungstag und Bekanntmachung des Hinweises auf die Patenterteilung: **09.04.2014**
(21) Anmeldenummer: 07821434.3
(22) Anmeldetag: 17.10.2007
(51) Int. Cl.: B60S 1/04

(54) **GEHÄUSEANORDNUNG EINER WISCHERANLAGE MIT SCHRAUBVERBINDUNG**
HOUSING ARRANGEMENT OF A WIPER SYSTEM WITH A SCREW CONNECTION
ENSEMBLE BOÎTIER D'UN SYSTÈME ESSUIE-GLACE À ASSEMBLAGE VISSÉ

(30) Priorität: 12.12.2006 DE 102006058741
(43) Veröffentlichungstag der Anmeldung: 23.09.2009
(73) Patentinhaber: Robert Bosch GmbH, 70442 Stuttgart (DE)
(72) Erfinder: KRAUS, Achim, 77815 Buehl (DE)
(86) Internationale Anmeldenummer: PCT/EP2007/061069
(87) Internationale Veröffentlichungsnummer: WO 2008/071488

(56) Entgegenhaltungen:
- DE-A1- 19 855 741
- FR-A- 2 783 477

## Beschreibung

### Stand der Technik

Die Erfindung betrifft eine Gehäuseanordnung einer Wischeranlage eines Kraftfahrzeugs gemäß dem Oberbegriff des Anspruchs 1.

Aus der US 6,343,403 B1 ist eine Gehäuseanordnung einer Wischeranlage eines Kraftfahrzeugs bekannt, bei der ein Getriebegehäuse mit einem Befestigungsabschnitt eines als Rundrohr ausgebildeten Befestigungsrohres verschraubt ist.

Der Befestigungsabschnitt des Befestigungsrohres ist derart verformt, dass eine ebene Anlagefläche für das Getriebegehäuse gebildet ist. Hierzu liegen die einander gegenüberliegenden Wandabschnitte des ursprünglich auch im Befestigungsabschnitt runden Befestigungsrohres unmittelbar aneinander an, so dass im Befestigungsabschnitt des Befestigungsrohres kein Hohlraum, also kein Abstand zwischen den einander gegenüberliegenden Rohrwandabschnitten existiert.

Das Befestigungsrohr ist hierdurch im Befestigungsabschnitt anfällig gegenüber Torsionsbelastungen.

Eine gattungsgemäße Gehäuseanordnung ist aus dem Dokument FR-A-2 783 477 bekannt. Daneben sind Gehäuseanordnungen von Wischeranlagen bekannt, bei denen das Befestigungsrohr im Befestigungsabschnitt nicht, oder derart verformt ist, dass zwischen einander gegenüberliegenden Wandabschnitten des Befestigungsrohres ein Abstand eingehalten wird. Dies wirkt sich positiv auf die Torsionssteifigkeit aus. Wird bei den bekannten Gehäuseanordnungen das Befestigungsrohr gegen das Gehäuse verschraubt, so liegt der Schraubenkopf der zur Anwendung kommenden Befestigungsschraube auf der Außenseite des von dem Gehäuse beabstandeten Wandabschnittes des Befestigungsrohres an, so dass keine beliebig feste Klemmung des Befestigungsrohres erfolgen kann, da sich hierdurch das Befestigungsrohr zusehens durch die Krafteinwirkung des Schraubenkopfes verformen würde.

### Offenbarung der Erfindung

### Technische Aufgabe

Der Erfindung liegt daher die Aufgabe zugrunde, eine Gehäuseanordnung anzugeben, bei der das Befestigungsrohr auch im Befestigungsabschnitt eine hohe Torsionssteifigkeit aufweist und bei der gleichzeitig das Befestigungsrohr mit einer großen Anpresskraft beaufschlagbar ist.

### Technische Lösung

Diese Aufgabe wird mit den Merkmalen des Anspruchs 1 gelöst. Vorteilhafte Weiterbildungen der Erfindung sind in den Unteransprüchen angegeben.

Der Erfindung liegt der Gedanke zugrunde, die Gehäuseanordnung derart zu konfigurieren, dass die Schraubverbindung unmittelbar an dem Innenseitenabschnitt des dem Gehäuse zugewandten Wandabschnittes anliegt, so dass die von der Schraubverbindung auf das Befestigungsrohr ausgeübte Anpresskraft unmittelbar auf den dem Gehäuse zugewandten Wandabschnitt wirkt. Zusätzlich kann die Schraubverbindung

bei Bedarf derart ausgebildet sein, dass sie zusätzlich den dem Gehäuse abgewandten Wandabschnitt in Richtung des Gehäuses kraftbeaufschlagt. Diese Gehäuseanordnungsausgestaltung ermöglicht es, dass die Schraubverbindung auf Block verschraubt werden kann, da der dem Gehäuse zugewandte Wandabschnitt aufgrund der Anlage am Gehäuse nicht oder nur in engen Grenzen verformbar ist, wodurch eine optimal feste Verbindung zwischen dem karosseriefesten Befestigungsrohr und dem Gehäuse erzielt wird. Dadurch, dass die Schraubverbindung unmittelbar auf den dem Gehäuse zugewandten, insbesondere an diesem anliegenden Wandabschnitt wirkt, kann trotz eines (nahezu beliebig) festen Anziehens der Schraubverbindung ein Hohlraum im Befestigungsabschnitt, also ein Abstand zwischen dem dem Gehäuse zugewandten Wandabschnitt und dem gegenüberliegenden Wandabschnitt eingehalten werden, so dass nicht nur die Festigkeit der Verbindung zwischen Gehäuse und Befestigungsrohr optimal ist, sondern zusätzlich eine hohe Torsionssteifigkeit des Befestigungsrohres im Bereich des Befestigungsabschnittes erzielt wird.

Um eine optimale Anlage des dem Gehäuse zugewandten ersten Wandabschnitts an dem in diesem Bereich bevorzugt eben ausgebildeten Gehäuse zu gewährleisten, ist mit Vorteil vorgesehen, dass der dem Gehäuse zugewandte Wandabschnitt zumindest näherungsweise eben ist. Durch die hierdurch geschaffene großflächige Anlage zwischen dem Befestigungsabschnitt und dem Gehäuse können etwaige Gehäuseschwingungen an das Befestigungsrohr abgeleitet werden.

Zusätzlich oder alternativ ist es von Vorteil, den gegenüberliegenden gehäusefernen zweiten Wandabschnitt eben auszubilden, insbesondere um die Fertigung des dem Gehäuse zugewandten Wandabschnittes zu vereinfachen, in dem beide Wandabschnitte druckbeaufschlagt werden und dabei nicht abgestützt werden müssen. Bevorzugt ist das ursprünglich vorzugsweise rund konturierte Befestigungsrohr im Befestigungsabschnitt bezogen auf eine, insbesondere parallel zu dem Gehäuse verlaufende Symmetrieachse symmetrisch verformt, mit zwei gegenüberliegenden, im Wesentlichen parallelen Wandabschnitten, die über im Wesentlichen halbkreisförmige seitliche Wandabschnitte miteinander verbunden sind.

In Weiterbildung der Erfindung ist mit Vorteil vorgesehen, dass im Bereich des Befestigungsabschnittes mindestens zwei gegenüberliegende Öffnungen vorgesehen sind, also Öffnungen, die in einer Flucht liegen. Dabei durchsetzt die mindestens eine Schraubverbindung zumindest die erste Öffnung des ersten, dem Befestigungsrohr zugewandten Wandabschnitts.

Von besonderem Vorteil ist es, wenn die der ersten Öffnung gegenüberliegende zweite Öffnung in dem dem Gehäuse abgewandten Wandabschnitt größer ist, als die erste Öffnung. Hierdurch wird die Zugänglichkeit zu der Schraubverbindung zu Betätigungszwecken verbessert.

Erfindungsgemäß ist die Schraube als eine Bundschraube einzusetzen, wobei der Schraubenbund derart bemessen ist, dass er die erste Öffnung in radialer Richtung überragt, wodurch die Bundschraube mit ihrem Schraubenbund axial gegen den ersten Innenwandabschnitt verschraubt ist.

Um eine gute Zugänglichkeit zu der Bundschraube und damit eine erleichterte Montage zu gewährleisten, ist mit Vorteil vorgesehen, dass die Bundschraube einen Schraubenkopf aufweist, der die zweite Öffnung überragt. Der Schraubenbund kann dabei in axialer Richtung derart bemessen sein, dass der Schraubenkopf im fixierten Zustand an der Außenseite des zweiten Wandabschnittes anliegt oder den zweiten Wandabschnitt sogar geringfügig in Richtung des Gehäuses deformiert. Ebenso ist es denkbar, dass im fixierten Zustand der Bundschraube ein Axialabstand zu dem dem Gehäuse abgewandten Wandabschnitt eingehalten wird. Die Fixierung des Befestigungsrohrs erfolgt dann ausschließlich über den Schraubenbund.

In einer nicht beanspruchten Ausführung ist es denkbar, dass die Schraubverbindung eine Gewindestange mit einem Außengewinde umfasst, wobei die Gewindestange am bzw. im Gehäuse festgelegt oder einstückig mit diesem ausgebildet ist. Im Falle einer Gewindestange wird die Anpresskraft auf den ersten Innenwandabschnitt des ersten Wandabschnitts von einer Mutter der Schraubverbindung aufgebracht, die auf der Gewindestange in Richtung des Gehäuses gegen den ersten Innenwandabschnitt verschraubt ist. Das Aufsetzen der Mutter auf die Gewindestange sowie das Verdrehen der Mutter kann durch die zweite Öffnung im zweiten Wandabschnitt erfolgen. Bevorzugt handelt es sich bei der Gewindestange um eine Gewindestange aus Stahl, die in das Gehäuse eingegossen ist, wodurch ein maximales Anzugsmoment realisiert werden kann, da die Schraubverbindung keine Aluminiumteile umfasst.

Um das Befestigungsrohr zu dem Gehäuse möglichst exakt auszurichten, können an den verwendeten Schrauben vorgesehene zylindrische Flächen angeordnet sein. Bevorzugt ist eine Ausführungsform, bei der am Getriebegehäuse mindestens ein Fangstift angeordnet ist, der in ein korrespondierendes Fangloch im Befestigungsrohr eingreift.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:

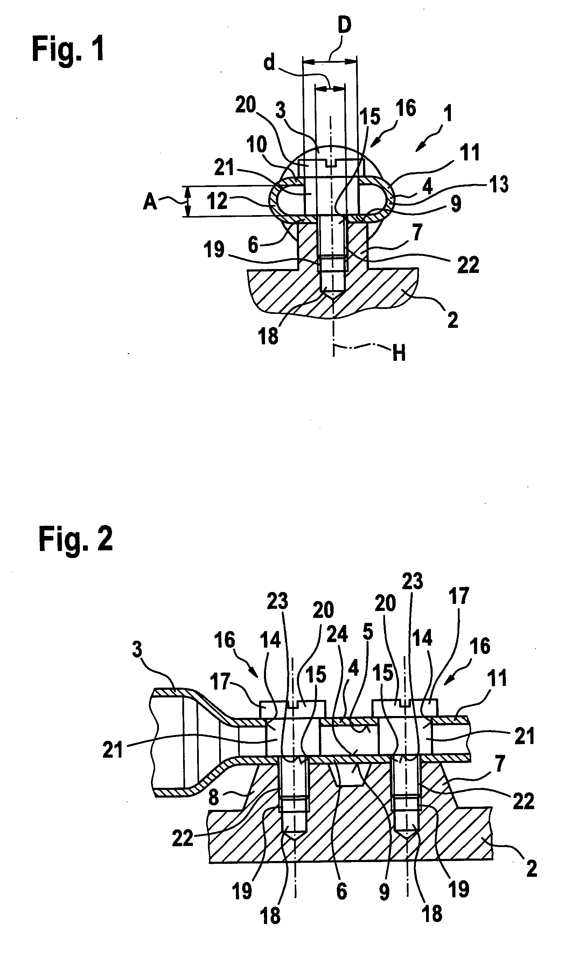

- Fig. 1:: eine geschnittene Teilansicht einer Gehäuseanordnung einer Scheibenwischeranlage mit einem Getriebegehäuse, welches an einem Befestigungsabschnitt eines Befestigungsrohres festgelegt ist und
- Fig. 2:: eine um 90° gedrehte, geschnittene Teilansicht der Gehäuseanordnung gemäß Fig. 1.

### Ausführungsformen der Erfindung

In den Figuren sind gleiche Bauteile und Bauteile mit der gleicher Funktion mit den gleichen Bezugszeichen gekennzeichnet.

In den Figuren ist eine Gehäuseanordnung 1 einer Wischeranlage eines Kraftfahrzeugs in unterschiedlichen Ansichten gezeigt. Diese umfasst ein Gehäuse 2 mit einem nicht dargestellten Wischermotor und einem nicht dargestellten Wischergetriebe. Das Gehäuse 2 ist an einem ausschnittsweise dargestellten metallischen Befestigungsrohr 3 festgelegt.

Bei dem Befestigungsrohr 3 handelt es sich um ein Rundrohr, welches in einem Befestigungsabschnitt 4 verformt ist. Der Befestigungsabschnitt 4 erstreckt sich über einen Axialabschnitt des Befestigungsrohres 3. Der Befestigungsabschnitt 4 des Befestigungsrohres 3 weist einen im Wesentlichen ebenen, dem Gehäuse 2 zugewandten ersten Wandabschnitt 6 auf, der auf zwei Befestigungsdomen 7, 8 des Gehäuses 2 aus Aluminiumguss mit seiner in der Zeichnungsebene unteren ersten Außenseite 9 aufliegt.

Im Wesentlichen parallel zu dem ersten Wandabschnitt 6 verläuft ein ebenfalls im Wesentlichen ebener zweiter Wandabschnitt 10. Beide Wandabschnitte 6, 10 sind Teil der Umfangswand 11 des ursprünglich vollständig rund konturierten Befestigungsrohres 3 und sind über zwei seitliche, halbkreisförmig konturierte Wandabschnitte 12, 13 einstückig miteinander verbunden. In dem in der Zeichnungsebene oberen, zweiten Wandabschnitt 10 sind zwei voneinander in Axialrichtung beabstandete zweite Öffnungen 14 eingebracht, insbesondere eingestanzt oder eingebohrt. Den zweiten Öffnungen 14 unmittelbar gegenüber ist jeweils eine erste Öffnung 15 in den ersten Wandabschnitt 6 eingebracht. Der Durchmesser D der zweiten Öffnung ist größer als der Durchmesser d der ersten Öffnung. Beide Öffnungen sind koaxial zu einer Hochachse H angeordnet.

Das Gehäuse 2 ist über zwei axial beabstandete Schraubverbindungen 16 mit dem Befestigungsabschnitt 4 des Befestigungsrohres 3 verbunden. In dem gezeigten Ausführungsbeispiel bestehen die Schraubverbindungen 16 aus jeweils einer Bundschraube 17 und jeweils einer Sacklochbohrung 18 mit Innengewinde 19. Die Sacklochbohrungen 18 sind in die Befestigungsdome 7, 8 eingebracht.

Die identischen Bundschrauben 17 sind mit einem Schraubenkopf 20 versehen, der die zweite Öffnung 14 in radialer Richtung überragt und mit geringem Anpressdruck außen an dem zweiten Wandabschnitt anliegt. In axialer Richtung schließt an jeden Schraubenkopf 20 ein durch die zweite Öffnung 14 hindurchgeführter Schraubenbund 21 an. Der Durchmesser D der zweiten Öffnung 14 ist unwesentlich größer als der Durchmesser des Schraubenbundes 21, dessen Durchmesser wiederum größer ist als der Durchmesser d der ersten Öffnung 15. Bei dem Schraubenbund 21 handelt es sich um einen zylindrischen Axialabschnitt, dessen Durchmesser den Durchmesser eines in axialer Richtung anschließenden Außengewindes 22 in radialer Richtung überragt. Da der Durchmesser des Schraubenbundes 21, wie erwähnt, größer ist als der Durchmesser d der ersten Öffnung 15, liegt der Schraubenbund 21 mit einer Umfangsschulter 23 auf einem ersten Innenseitenabschnitt 24 des ersten Wandabschnittes 6 auf. Das Außengewinde 22 der Bundschraube 17 ist durch die erste Öffnung 15 hindurchgeführt und mit dem Innengewinde 19 verschraubt, so dass von der Umfangsschulter 23 eine Anpresskraft auf den ersten Innenseitenabschnitt des Befestigungsabschnittes 4 in Richtung des Gehäuses 2 ausgeübt wird, woraus eine feste Verbindung zwischen Gehäuse 2 und Befestigungsrohr 3 resultiert.

Dem ersten Innenseitenabschnitt 24 des ersten Wandabschnittes 6 liegt im Wesentlichen parallel ein zweiter Innenseitenabschnitt 5 des zweiten Wandabschnittes 10 mit Abstand A gegenüber, so dass ein vergleichsweise torsionssteifer Befestigungsabschnitt 3 erhalten wird. Der Hohlraum innerhalb des Befestigungsabschnittes 3 ist näherungsweise oval konturiert.

## Patentansprüche

1. Gehäuseanordnung einer Wischeranlage eines Kraftfahrzeugs, mit einem an mindestens einem Befestigungsabschnitt (4) eines Befestigungsrohres (3) mittels mindestens einer das Befestigungsrohr (3) durchsetzenden Schraubverbindung (16) festgelegten, einen Wischermotor und/oder ein Wischergetriebe beinhaltenden Gehäuse (2), wobei im Befestigungsabschnitt (4) zwischen einem ersten Innenseitenabschnitt (24) eines dem Gehäuse (2) zugewandten ersten Wandabschnittes (6) des Befestigungsrohres (3) und einem zweiten Innenseitenabschnitt (5) eines gegenüberliegenden zweiten Wandabschnittes(10) ein Abstand (A) vorgesehen ist, wobei die Schraubverbindung (16) eine Anpresskraft in Richtung Gehäuse (2) auf den ersten Innenseitenabschnitt (24) ausübend angeordnet ist, **dadurch gekennzeichnet, daß** die Schraubverbindung (16) eine Bundschraube (17) umfaßt, die einen Schraubenkopf (20) und einen Schraubenbund (21) aufweist, wobei der Schraubenbund (21) axial gegen den ersten Innenseitenabschnitt (24) verschraubt ist.

2. Gehäuseanordnung nach Anspruch 1, **dadurch gekennzeichnet, dass** der erste, dem Gehäuse (2) zugewandte Wandabschnitt (6) zumindest näherungsweise eben ist.

3. Gehäuseanordnung nach einem der vorhergehenden Ansprüche, **dadurch gekennzeichnet, dass** der zweite Wandabschnitt (10) zumindest näherungsweise eben ist.

4. Gehäuseanordnung nach einem der vorhergehenden Ansprüche, **dadurch gekennzeichnet, dass** in den ersten Wandabschnitt (6) eine erste Öffnung (15) und in dem zweiten Wandabschnitt (10) eine zweite Öffnung (14) eingebracht ist, wobei beide Öffnungen (14, 15) einander gegenüberliegen.

5. Gehäuseanordnung nach Anspruch 4, **dadurch gekennzeichnet, dass** der Durchmesser (D) der zweiten Öffnung (14) größer ist, als der Durchmesser (d) der ersten Öffnung (15).

6. Gehäuseanordnung nach Anspruch 4 oder 5, **dadurch gekennzeichnet, dass** die Schraube (57) die erste Öffnung (15) durchsetzt
und mit einem Innengewinde (19) des Gehäuses (2) verschraubt ist.

7. Gehäuseanordnung nach einem der vorgehenden Ansprüche, **dadurch gekennzeichnet, dass** der Schraubenkopf (20) sich oberhalb der zweiten Öffnung (14) befindet und vorzugsweise seitlich der ersten Öffnung (15) außen an dem zweiten Wandabschnitt (13) anliegt.

8. Gehäuseanordnung nach einem der vorhergehenden Ansprüche, **dadurch gekennzeichnet, dass** mindestens ein, eine Fangöffnung des Befestigungsrohres (3) durchsetzender Fangstift am Gehäuse (2) vorgesehen ist.

## Claims

1. Housing arrangement of a wiper system of a motor vehicle, with a housing (2) which is fixed to at least one fastening section (4) of a fastening tube (3) by means of at least one screw connection (16) passing through the fastening tube (3) and which contains a wiper motor and/or a wiper mechanism, wherein a distance (A) is provided in the fastening section (4) between a first inside section (24) of a first wall section (6) of the fastening tube (3), said wall section facing the housing (2), and a second inside section (5) of an opposite, second wall section (10), wherein the screw connection (16) is arranged in a manner exerting a press-on force on the first inside section (24) in the direction of the housing (2), **characterized in that** the screw connection (16) comprises a collar screw (17) which has a screw head (20) and a screw collar (21), wherein the screw collar (21) is screwed axially against the first inside section (24).

2. Housing arrangement according to Claim 1, **characterized in that** the first wall section (6) which faces the housing (2) is at least approximately flat.

3. Housing arrangement according to either of the preceding claims, **characterized in that** the second wall section (10) is at least approximately flat.

4. Housing arrangement according to one of the preceding claims, **characterized in that** a first opening (15) is provided in the first wall section (6) and a second opening (14) is provided in the second wall section (10), wherein the two openings (14, 15) are opposite each other.

5. Housing arrangement according to Claim 4, **characterized in that** the diameter (D) of the second opening (14) is larger than the diameter (d) of the first opening (15).

6. Housing arrangement according to Claim 4 or 5, **characterized in that** the screw (17) passes through the first opening (15) and is screwed to an internal thread (19) of the housing (2).

7. Housing arrangement according to one of the preceding claims, **characterized in that** the screw head (20) is located above the second opening (14) and, preferably to the side of the first opening (15), bears on the outside of the second wall section (13).

8. Housing arrangement according to one of the preceding claims, **characterized in that** at least one catch pin passing through a catch opening in the fastening tube (3) is provided on the housing (2).

## Revendications

1. Ensemble de boîtier d'une installation d'essuie-glace d'un véhicule automobile, comprenant un boîtier (2) fixé à au moins une portion de fixation (4) d'un tube de fixation (3) au moyen d'au moins une connexion vissée (16) traversant le tube de fixation (3), contenant un moteur d'essuie-glace et/ou une transmission pour essuie-glace, un espacement (A) étant prévu dans la portion de fixation (4) entre une première portion de côté intérieur (24) d'une première portion de paroi (6) du tube de fixation (3) tournée vers le boîtier (2) et une deuxième portion de côté intérieur (5) d'une deuxième portion de paroi (10) opposée, la connexion vissée (16) étant disposée de manière à exercer une force de pression dans la direction du boîtier (2) sur la première portion de côté intérieur (24), **caractérisé en ce que** la connexion vissée (16) comprend une vis à embase (17), laquelle présente une tête de vis (20) et une embase de vis (21), l'embase de vis (21) étant vissée axialement contre la première portion de côté intérieur (24).

2. Ensemble de boîtier selon la revendication 1, **caractérisé en ce que** la première portion de paroi (6) tournée vers le boîtier (2) est au moins approximativement plane.

3. Ensemble de boîtier selon l'une quelconque des revendications précédentes, **caractérisé en ce que** la deuxième portion de paroi (10) est au moins approximativement plane.

4. Ensemble de boîtier selon l'une quelconque des revendications précédentes, **caractérisé en ce que** dans la première portion de paroi (6) est pratiquée une première ouverture (15) et dans la deuxième portion de paroi (10) est pratiquée une deuxième ouverture (14), les deux ouvertures (14, 15) étant opposées l'une à l'autre.

5. Ensemble de boîtier selon la revendication 4, **caractérisé en ce que** le diamètre (D) de la deuxième ouverture (14) est supérieur au diamètre (d) de la première ouverture (15).

6. Ensemble de boîtier selon la revendication 4 ou 5, **caractérisé en ce que** la vis (17) traverse la première ouverture (15) et est vissée avec un filetage interne (19) du boîtier (2).

7. Ensemble de boîtier selon l'une quelconque des revendications précédentes, **caractérisé en ce que** la tête de vis (20) se trouve au-dessus de la deuxième ouverture (14) et s'applique de préférence latéralement à la première ouverture (15) à l'extérieur contre la deuxième portion de paroi (13).

8. Ensemble de boîtier selon l'une quelconque des revendications précédentes, **caractérisé en ce qu'**au moins une goupille d'accrochage traversant une ouverture d'accrochage du tube de fixation (3) est prévue sur le boîtier (2).
